# EUROPÄISCHE PATENTSCHRIFT

(11) **EP 1 657 466 B1**
(45) Veröffentlichungstag und Bekanntmachung des Hinweises auf die Patenterteilung: **23.07.2008**
(21) Anmeldenummer: 05020736.4
(22) Anmeldetag: 23.09.2005
(51) Int. Cl.: F16F 1/36

(54) **Lagerbuchse**
Bush
Manchon de fixation

(30) Priorität: 11.11.2004 DE 102004054619
(43) Veröffentlichungstag der Anmeldung: 17.05.2006
(73) Patentinhaber: Carl Freudenberg KG, 69469 Weinheim (DE)
(72) Erfinder: Bartels, Philipp, 13353 Berlin (DE); Pfaff, Thomas, 16766 Kremmen-Beetz (DE); Ebert, Michael, 13353 Berlin (DE); Padios, Alexander, 12359 Berlin (DE); Hack, Rüdiger, 67346 Speyer (DE)

(56) Entgegenhaltungen:
- EP-A- 0 656 271
- EP-A- 1 482 205
- DE-A1- 1 964 633
- US-A- 2 906 572
- US-A- 3 639 015
- US-A- 4 044 977
- PATENT ABSTRACTS OF JAPAN Bd. 012, Nr. 334 (P-756), 8. September 1988 (1988-09-08) -& JP 63 095513 A (KINUGAWA RUBBER IND CO LTD), 26. April 1988 (1988-04-26)

## Beschreibung

Die Erfindung betrifft eine Lagerbuchse.

Lagerbuchsen sind allgemein bekannt und umfassen beispielsweise eine Stützhülse, die von einem Federkörper aus elastomerem Werkstoff umschlossen ist, wobei der Federkörper eine hohlzylinderförmige Federhülse und eine umfangsseitig umlaufende, sich radial nach außen erstreckende Federlippe aufweist.

Eine solche Lagerbuchse ist aus der US 2,906,572 bekannt. Die Lagerbuchse weist einen im Wesentlichen X-förmigen Federkörper aus elastomerem Werkstoff auf, wobei die radial inneren Schenkel die radial äußere Lagerschale umgreifen und die radial äußeren Schenkel an einem rohrförmigen Gehäuse abgestützt sind. Zur Begrenzung von extremen radialen Auslenkbewegungen ist ein umfangsseitig umlaufender Anschlagring vorgesehen, der axial mittig zwischen den radial äußeren Schenkeln des Federkörpers angeordnet ist. Dieser ist dem rohrförmigen Gehäuse mit radialem Abstand benachbart zugeordnet und, im Längsschnitt betrachtet, dachförmig.

Eine Lagerbuchse gemäß dem Oberbegriff des Anspruchs 1 ist aus der US 3,639,015 bekannt.

Der Erfindung liegt die Aufgabe zu Grunde, eine Lagerbuchse der eingangs genannten Art derart weiter zu entwickeln, dass diese im eingebauten Zustand bei radialen Auslenkbewegungen zwei Federraten aufweist; bei radialer Auslenkbewegung soll der Federkörper zunächst weicher und bei weiterer Auslenkbewegung in derselben Richtung anschließend härter sein.

Diese Aufgabe wird erfindungsgemäß mit den Merkmalen von Anspruch 1 gelöst. Auf vorteilhafte Ausgestaltungen nehmen die Unteransprüche Bezug.

### Technisches Gebiet

Zur Lösung der Aufgabe ist eine Lagerbuchse vorgesehen, bei der die Federlippe bei maximaler Verformung radial nach innen mit der Außenumfangsfläche der Federhülse oberflächenbündig ausgebildet ist.

Während der bestimmungsgemäßen Verwendung der Lagerbuchse berührt die Federlippe radial außenseitig die Begrenzungswandung einer Bohrung eines Maschinenelements, in das die Lagerbuchse montiert ist.

Bei dem zwei Federraten aufweisenden Federkörper ist von Vorteil, dass bei radialen Auslenkbewegungen der Lagerbuchse die Feder zunächst weich ist. In einem definierten radialen Wegbereich ist die Federlippe leicht verformbar.
Bei weiterer Bewegung der Lagerbuchse in radialer Richtung stützt sich die Federlippe allmählich mit ihrer Innenseite gegenüber der Stützhülse ab, derart, dass die Außenseite der Federlippe oberflächenbündig mit der Außenumfangsfläche der Federhülse ausgebildet ist. Bei weiterer Verlagerung in radialer Richtung ist der Federkörper in radialer Richtung hart.

Die Stützhülse besteht bevorzugt aus einem metallischem Werkstoff. Derartige Stützhülsen sind einfach und kostengünstig herstellbar.

Die Federhülse und die Federlippe sind bevorzugt einstückig ineinander übergehend und materialeinheitlich ausgebildet. Die Herstellung einer solchen Lagerbuchse ist dadurch wesentlich vereinfacht.

Die Federhülse und die Federlippe können axial benachbart zueinander angeordnet sein. Auch bei einer solchen Ausgestaltung ist die einfache Herstellbarkeit von hervorzuhebendem Vorteil.
Die Lagerbuchse umschließt ein erstes Maschinenelement, beispielsweise einen Bolzen, außenumfangsseitig und zusammen mit dem Bolzen ist sie in der Bohrung eines weiteren Maschinenelements, beispielsweise in einer Schalthebelführung eines schaltbaren Getriebes, angeordnet.

Der Federkörper kann eine axiale Länge aufweisen, die der axialen Länge der Stützhülse entspricht. Die Außenumfang der Stützhülse ist dadurch vor negativen äußeren Einflüssen geschützt. Eines zusätzlichen Korrosionsschutzes auf dem Außenumfang der Stützhülse bedarf es deshalb nicht.

Der Federkörper kann kraft- oder stoffschlüssig mit dem Außenumfang der Stützhülse verbunden sein.
Bevorzugt ist der Federkörper stoffschlüssig, durch Vulkanisation, mit dem Außenumfang der Stützhülse verbunden. Durch eine solche Ausgestaltung ist eine zuverlässige Zuordnung von Stützhülse und Federkörper während einer langen Gebrauchsdauer sichergestellt. Für manche Anwendungsfällle kann es vorteilhaft sein, wenn der Federkörper kraftschlüssig mit dem Außenumfang der Stützhülse verbunden ist. Eine solche kraftschlüssige Verbindung ist beispielsweise im Hinblick auf die rasche Herstellung von Muster-Lagerbuchsen oder sortenreines Recycling von Vorteil.

Das Verhältnis aus axialer Länge des Federkörpers zu radialer Dicke der Federhülse kann 6 bis 15, bevorzugt 11, betragen. Ein solches Verhältnis hat sich besonders dann als vorteilhaft bewährt, wenn die Lagerbuchse in einer Schalthebelführung eines schaltbaren Getriebes zur Anwendung gelangt.

Generell, insbesondere jedoch für einen solchen Anwendungsfall ist es besonders vorteilhaft, wenn die Federlippe mit der Symmetrieachse der Lagerbuchse herstellungsbedingt einen Winkel von 15 bis 45°, bevorzugt 25 bis 30° einschließt.

Der geforderte weiche Bereich der radialen Kennlinie wird durch die in axialer Richtung konische Federlippe realisiert. Die Federlippe steht um ein Maß radial über den Stützköper hervor, das dem Betrag des weichen Federkennlinienabschnitts entspricht.

Innerhalb des axialen Bereichs der Federlippe ist der Federkörper um die Dicke der Federlippe verringert, so dass sich die Federlippe unter radialer Belastung am Ende des weichen Abschnitts der Federkennlinie mittelbar oder unmittelbar an der Stützhülse abstützt und oberflächenbündig mit der Außenumfangsfläche der Federhülse ausgebildet ist. Dann bilden die Federlippe und die Federhülse eine Einheit, die eine härtere Federkennlinie aufweist, als die Federlippe für sich allein.

Es ist von wesentlicher Bedeutung, dass die Federlippe bei maximaler Verformung radial nach innen mit der Außenumfangsfläche der Federhülse oberflächenbündig ausgebildet ist.

Die Stützhülse kann stirnseitig axial auf der der Federhülse zugewandten Seite einen sich radial nach außen erstreckenden Stützbund aufweisen, der eine radiale Erstreckung aufweist, die geringer als der Außendurchmesser der Federhülse ist. Das Verhältnis aus Durchmesser des Außenumfangs der Federhülse zu Durchmesser des Außenumfangs des Stützbunds ist jedenfalls größer als 1 und beträgt bevorzugt 1,1. Der Stützbund ist zum Schutz des Federkörpers vorgesehen. Zur Begrenzung der mechanischen Belastung auf den Federkörper ist der Stützbund als Anschlag vorgesehen, zur Begrenzung extremer Auslenkbewegungen, bezogen auf das Maschinenelement, in dessen Bohrung die Lagerbuchse montiert ist. Damit wird eine lebensdauerschädliche Überlastung des elastomeren Werkstoffs, aus dem der Federkörper besteht, verhindert.

Die Verwendung der Lagerbuchse ist durch die beiden Federraten des Federkörpers in einer Schalthebelführung eines schaltbaren Getriebes besonders vorteilhaft.

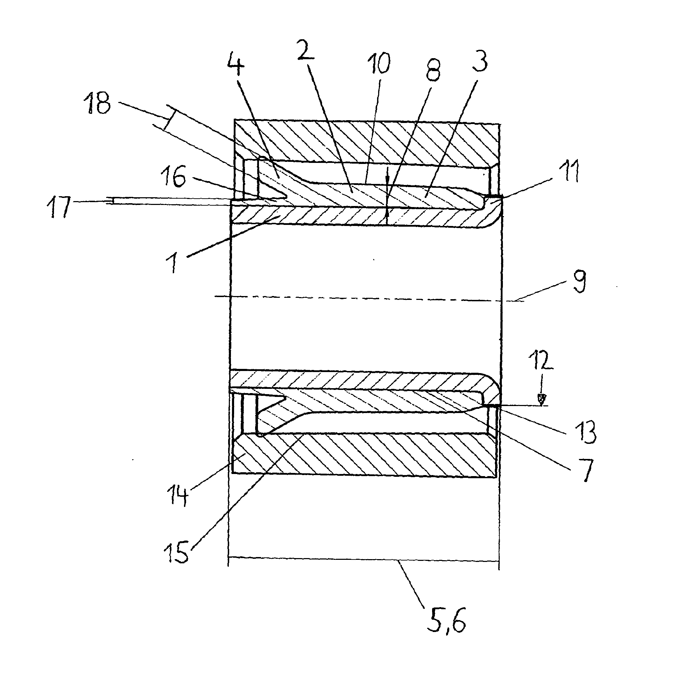

Ein Ausführungsbeispiele der erfindungsgemäßen Lagerbuchse wird nachfolgend anhand der Figur näher erläutert.

In der Figur ist die erfindungsgemäßen Lagerbuchse schematisch gezeigt. Die Lagerbuchse ist in dem gezeigten Ausführungsbeispiel in einer Schalthebelführung 14 eines schaltbaren Getriebes dargestellt, wobei die Federlippe 4 in ihrer herstellungsbedingten Form gezeigt ist. Während der bestimmungsgemäßen Verwendung berührt die Federlippe die Innenumfangsfläche 15 der Schalthebelführung 14 unter radialer Vorspannung elastisch anliegend.

Die Stützhülse 1 ist in dem hier gezeigten Ausführungsbeispiel aus einem metallischen Werkstoff; der Federkörper besteht aus einem geeigneten elastomeren Werkstoff.

Der Federkörper 2 besteht aus zwei axial zueinander benachbarten Teilbereichen, wobei einer der Teilbereiche durch die hohlzylinderförmige Federhülse 3 und der andere Teilbereich durch die umfangsseitig umlaufende, sich radial nach außen erstreckende Federlippe 4 gebildet ist. Die Federhülse 3 und die Federlippe 4 sind einstückig ineinander übergehend und materialeinheitlich ausgebildet.

Der Federkörper 2 ist auf den Außenumfang 7 der Stützhülse 1 vulkanisiert, wobei die Federlippe 4 in radialer Richtung federnd ausgebildet ist. Im hier gezeigten Ausführungsbeispiel schließt die Federlippe 4 mit der Symmetrieachse 9 der Lagerbuchse herstellungsbedingt einen Winkel von 25 bis 30° ein.

Der Federkörper 2 überdeckt die gesamte axiale Länge der Stützhülse 1 und zwar auch in den Bereichen radial innenseitig der Federlippe 4 und radial außenseitig des Stützbunds 11. Die Beschichtung 16 der Stützhülse 1 mit elastomerem Werkstoff hat eine Dicke 17, die zusammen mit der Dicke 18 der radial vollständig nach innen eingefederten Federlippe 4 der radialen Dicke 8 der Federhülse 3 entspricht; in diesem Betriebszustand weist der Federkörper 2 eine ebene Oberfläche auf, die sich parallel zur Symmetrieachse 9 erstreckt.

Zur Begrenzung von extremen Auslenkbewegungen der Lagerbuchse, bezogen auf die Schalthebelführung 14, ist der Stützbund 11 vorgesehen, der den Schutz des aus elastomerem Werkstoff bestehenden Federkörpers 2 vor unerwünscht hohen mechanischen Belastungen bewirkt.

Für die guten Gebrauchseigenschaften der erfindungsgemäßen Lagerbuchse ist entscheidend, dass der Federkörper 2 zwei voneinander abweichende Federraten aufweist. Der Federkörper 2 ist so lange weich, so lange die Federlippe 4 nicht mittels der Beschichtung 16 auf der Stützhülse 1 abgestützt ist.
Stützt sich die Federlippe 4 demgegenüber mittels der Beschichtung 16 auf der Stützhülse 1 ab, ist der Federkörper hart.

## Patentansprüche

1. Lagerbuchse, umfassend eine Stützhülse (1) aus zähhartem Werkstoff, die von einem zwei Federraten aufweisenden Federkörper (2) aus elastomerem Werkstoff umschlossen ist, wobei der Federkörper (2) eine hohlzylinderförmige Federhülse (3) und eine umfangsseitig umlaufende, sich radial nach außen erstreckende Federlippe (4) aufweist, **dadurch gekennzeichnet, dass** die Federlippe (4) bei maximaler Verformung radial nach innen mit der Außenumfangsfläche (10) der Federhülse (3) oberflächenbündig ausgebildet ist.

2. Lagerbuchse nach Anspruch 1, **dadurch gekennzeichnet, dass** die Federhülse (3) und die Federlippe (4) einstückig ineinander übergehend und materialeinheitlich ausgebildet sind.

3. Lagerbuchse nach einem der Ansprüche 1 oder 2, **dadurch gekennzeichnet, dass** die Federhülse (3) und die Federlippe (4) axial benachbart zueinander angeordnet sind.

4. Lagerbuchse nach einem der Ansprüche 1 bis 3, **dadurch gekennzeichnet, dass** der Federkörper (2) eine axiale Länge (5) aufweist, die der axialen Länge (6) der Stützhülse (1) entspricht.

5. Lagerbuchse nach einem der Ansprüche 1 bis 4, **dadurch gekennzeichnet, dass** der Federkörper (2) kraft- oder stoffschlüssig mit dem Außenumfang (7) der Stützhülse (1) verbunden ist.

6. Lagerbuchse nach einem der Ansprüche 1 bis 5, **dadurch gekennzeichnet, dass** das Verhältnis aus axialer Länge (5) des Federkörpers (2) zu radialer Dicke (8) der Federhülse (3) 6 bis 15 beträgt.

7. Lagerbuchse nach einem der Ansprüche 1 bis 6, **dadurch gekennzeichnet, dass** die Federlippe (4) mit der Symmetrieachse (9) der Lagerbuchse herstellungsbedingt einen Winkel von 15 bis 45°, bevorzugt 25 bis 30° einschließt.

8. Lagerbuchse nach einem der Ansprüche 1 bis 7, **dadurch gekennzeichnet, dass** die Stützhülse (1) stirnseitig axial auf der der Federhülse (3) zugewandten Seite einen sich radial nach außen erstreckenden Stützbund (11) aufweist, der eine radiale Erstreckung (12) aufweist, die kleiner als der Außendurchmesser der Federhülse (3) ist.

9. Lagerbuchse nach Anspruch 8, **dadurch gekennzeichnet, dass** das Verhältnis aus Durchmesser des Außenumfangs (10) der Federhülse (3) zu Durchmesser des Außenumfangs (13) des Stützbunds (11) 1,1 beträgt.

10. Verwendung der Lagerbuchse gemäß einem der Ansprüche 1 bis 9 in einer Schalthebelführung eines schaltbaren Getriebes.

## Claims

1. Bush, comprising a supporting sleeve (1) which is made of semi-rigid material and is enclosed by a spring body (2) which has two spring rates and is made from elastomeric material, wherein the spring body (2) has a spring sleeve (3) in the form of a hollow cylinder, and a spring lip (4) which encircles it on the periphery and extends radially outwards, **characterized in that** the spring lip (4) is designed such that, at maximum deformation radially inwards, it is flush with the outer peripheral surface (10) of the spring sleeve (3).

2. Bush according to Claim 1, **characterized in that** the spring sleeve (3) and the spring lip (4) are designed such that they merge integrally into each other and are made of the same material.

3. Bush according to either of Claims 1 and 2, **characterized in that** the spring sleeve (3) and the spring lip (4) are arranged such that they are axially adjacent to each other.

4. Bush according to one of Claims 1 to 3, **characterized in that** the spring body (2) has an axial length (5) which corresponds to the axial length (6) of the supporting sleeve (1).

5. Bush according to one of Claims 1 to 4, **characterized in that** the spring body (2) is connected frictionally or with a cohesive material joint to the outer periphery (7) of the supporting sleeve (1).

6. Bush according to one of Claims 1 to 5, **characterized in that** the ratio of axial length (5) of the spring body (2) to radial thickness (8) of the spring sleeve (3) is 6 to 15.

7. Bush according to one of Claims 1 to 6, **characterized in that** the production process causes the spring lip (4) to enclose an angle of 15 to 45°, preferably 25 to 30°, with the axis of symmetry (9) of the bush.

8. Bush according to one of Claims 1 to 7, **characterized in that** the supporting sleeve (1) has a supporting collar (11) axially on the end side, on the side which faces the spring sleeve (3), said supporting collar extending radially outwards and having a radial extent (12) which is smaller than the outside diameter of the spring sleeve (3).

9. Bush according to Claim 8, **characterized in that** the ratio of diameter of the outer periphery (10) of the spring sleeve (3) to diameter of the outer periphery (13) of the supporting collar (11) is 1.1.

10. Use of the bush according to one of Claims 1 to 9 in a gearshift lever guide of a shiftable gear mechanism.

## Revendications

1. Coussinet, comprenant une douille de support (1) en matériau tenace, qui est enveloppée par un corps élastique (2) en matériau élastomère, présentant deux caractéristiques d'élasticité, le corps élastique (2) présentant une douille élastique (3) cylindrique creuse et une lèvre élastique (4) périphérique, s'étendant radialement vers l'extérieur sur la circonférence, **caractérisé en ce que** la lèvre élastique (4) est réalisée à fleur avec la surface périphérique extérieure (10) de la douille élastique (3) en cas de déformation maximale radialement vers l'intérieur.

2. Coussinet selon la revendication 1, **caractérisé en ce que** la douille élastique (3) et la lèvre élastique (4) sont réalisées d'une seule pièce en se prolongeant l'une dans l'autre et dans le même matériau.

3. Coussinet selon l'une quelconque des revendications 1 ou 2, **caractérisé en ce que** la douille élastique (3) et la lèvre élastique (4) sont disposées de manière adjacente axialement l'une à l'autre.

4. Coussinet selon l'une quelconque des revendications 1 à 3, **caractérisé en ce que** le corps élastique (2) présente une longueur axiale (5) qui correspond à la longueur axiale (6) de la douille de support (1).

5. Coussinet selon l'une quelconque des revendications 1 à 4, **caractérisé en ce que** le corps élastique (2) est connecté par engagement par force ou par liaison de matière à la périphérie extérieure (7) de la douille de support (1).

6. Coussinet selon l'une quelconque des revendications 1 à 5, **caractérisé en ce que** le rapport de la longueur axiale (5) du corps élastique (2) à l'épaisseur radiale (8) de la douille élastique (3) vaut de 6 à 15.

7. Coussinet selon l'une quelconque des revendications 1 à 6, **caractérisé en ce que** la lèvre élastique (4) forme avec l'axe de symétrie (9) du coussinet, du fait de la construction, un angle de 15 à 45°, de préférence de 25 à 30°.

8. Coussinet selon l'une quelconque des revendications 1 à 7, **caractérisé en ce que** la douille de support (1) présente du côté frontal axialement du côté tourné vers la douille élastique (3) un épaulement de support (11) s'étendant radialement vers l'extérieur, qui présente une étendue radiale (12) qui est inférieure au diamètre extérieur de la douille élastique (3).

9. Coussinet selon la revendication 8, **caractérisé en ce que** le rapport du diamètre de la périphérie extérieure (10) de la douille élastique (3) au diamètre de la périphérie extérieure (13) de l'épaulement de support (11) vaut 1,1.

10. Utilisation du coussinet selon l'une quelconque des revendications 1 à 9, dans une coulisse de changement de vitesse d'une boîte de vitesses à changement de vitesse.
